# EUROPÄISCHE PATENTSCHRIFT

(11) **EP 3 979 278 B1**
(45) Veröffentlichungstag und Bekanntmachung des Hinweises auf die Patenterteilung: **17.04.2024**
(21) Anmeldenummer: 21196494.5
(22) Anmeldetag: 14.09.2021
(51) Int. Cl.: H01F 38/30, H02B 13/035, H01F 27/32

(54) **STROMWANDLERMODUL FÜR EINE SCHALTANLAGE UND ENTSPRECHENDE SCHALTANLAGE**
CURRENT TRANSFORMER MODULE FOR A SWITCHGEAR AND CORRESPONDING SWITCHGEAR
MODULE DE TRANSFORMATEUR DE COURANT POUR UNE INSTALLATION DE COMMUTATION ET INSTALLATION DE COMMUTATION CORRESPONDANTE

(30) Priorität: 05.10.2020 DE 102020212523
(43) Veröffentlichungstag der Anmeldung: 06.04.2022
(73) Patentinhaber: Siemens Energy Global GmbH & Co. KG, 81739 München (DE)
(72) Erfinder: Kleinschmidt, Andreas, 16515 Oranienburg (DE); Lüthy, Norbert, 13591 Berlin (DE); Milewski, Peter, 12355 Berlin (DE); Steuer, Matthias, 91083 Baiersdorf (DE)

(56) Entgegenhaltungen:
- DE-A1-102018 219 803
- JP-A- 2000 156 327
- JP-A- 2001 196 251
- JP-U- H0 511 709

## Beschreibung

Die Erfindung betrifft ein Stromwandlermodul für eine Schaltanlage, insbesondere gasisolierte Schaltanlage, welche einen gekapselten Strompfad aufweist, mit einem hülsenförmigen Grundelement zur Bildung zumindest eines Isolationsabschnitts zur Isolation des Strompfades nach außen und mindestens einer ringförmigen Stromwandlereinheit, die auf dem hülsenförmigen Grundelement angeordnet ist und das hülsenförmige Grundelement dabei umfänglich umgibt.

Die Erfindung betrifft weiterhin eine entsprechende Schaltanlage mit einem gekapselten Strompfad und einem derartigen Stromwandlermodul.

Die Druckschrift DE 10 2005 005 445 A1 zeigt ein Stromwandlermodul für eine gasisolierte Schaltanlage, welche eine Rohrkapselung eines Strompfades aufweist. Das Stromwandlermodul weist seinerseits ein rohrförmiges Grundelement zur Bildung zumindest eines Abschnitts der Rohrkapselung und mehrere das rohrförmige Grundelement umfänglich umgebende Ringkerne auf. Die Druckschrift DE 10 2012 202 572 A1 zeigt ein ähnlich aufgebautes Stromwandlermodul mit Rohrkapselung. Hier sind die ringförmigen Stromwandlereinheiten jedoch in einer Tasche in dem Grundelement angeordnet und umgeben nur eine Innenwand des Grundelements umfänglich. Die Druckschrift DE 10 2011 089 398 A1 zeigt eine mögliche Einbausituation für derartige Stromwandlermodule im Detail.

JP H05 11709 U beschreibt eine Stromwandlermontagevorrichtung für ein Schaltgerät, die eine isolierende Form, die einen zentralen Abschnitt eines zentralen Leiters und ein Ende der Form abdeckt, eine Montageplatte, die integral mit der Form geformt ist, Montagelöcher, die durch den Umfangsrand der Montageplatte verlaufen, Verbindungslöcher für Verbindungsleiter, die an beiden Enden des Mittelleiters geformt sind, einen unbeschichteten Stromwandler, eine Kontaktplatte, die mit dem Stromwandler in Kontakt steht, und Schrauben, die durch die Durchgangslöcher und Montagelöcher der Kontaktplatte eingesetzt sind, um den Stromwandler zwischen der Montageplatte und der Kontaktplatte zu halten, umfasst.

JP 2000156327 A offenbart, dass bei einem Durchgangsstromwandler ein ringförmiger Eisenkern, um den eine Niederdruckwicklung gewickelt ist, und ein Abschnitt zur Bestimmung der Anschlussposition einstückig vorgesehen sind. Der Durchgangsstromwandler umfasst drei Stromwandler und drei Verbindungs- und Befestigungsabschnitte zum Verbinden und Befestigen der drei Stromwandler, deren Verbindungspositionen durch Verwendung des Verbindungspositionsbestimmungsabschnitts bestimmt werden. Die drei Stromwandler werden unter Verwendung des Verbindungspositionsbestimmungsabschnitts positioniert, so dass jeder Bus des Dreiphasenbusses an der optimalen Position jedes der ringförmigen Eisenstücke in den Bus eindringt, und der Stromwandler wird angeschlossen. Drei Stromtransformatoren sind durch einen Befestigungsabschnitt befestigt, um einen dreiphasigen Stromwandler zu bilden.

JP 2001196251 A offenbart eine Montagevorrichtung für einen Durchgangsstromwandler zur Montage eines Durchgangsstromwandlers in einem Behälter, in dem ein Durchgangsleiter untergebracht ist. Es ist eine ringförmige Struktur so angeordnet, dass sie den Durchgangsleiter umgibt, und die ringförmige Struktur hat eine horizontale Ebene in Kontakt mit sowohl der oberen Oberfläche und der untere Oberfläche des Durchgangsstromwandlers in der Richtung der Dicke. Eine innere Umfangsfläche, die dem durchdringenden Leiter zugewandt ist, und ein Druckelement zum Drücken der horizontalen Ebene in der Dickenrichtung des Durchgangsstromwandlers ist auf der horizontalen Ebene der ringförmigen Struktur angebracht.

Es ist die Aufgabe der Erfindung Maßnahmen anzugeben, durch die ein flexiblerer Aufbau des Stromwandlermoduls ermöglicht wird.

Die Lösung der Aufgabe erfolgt durch die Merkmale des unabhängigen Anspruchs.

Vorteilhafte Ausgestaltungen sind in den Unteransprüchen angegeben.

Bei dem erfindungsgemäßen Stromwandlermodul für eine Schaltanlage, insbesondere gasisolierte Schaltanlage, welche einen gekapselten Strompfad aufweist, umfasst dieses Stromwandlermodul (i) ein hülsenförmiges Grundelement zur Bildung zumindest eines Isolationsabschnitts der den Strompfad kapselnden Kapselung und (ii) mindestens eine ringförmige Stromwandlereinheit, die auf dem hülsenförmigen Grundelement angeordnet ist und das hülsenförmige Grundelement dabei umfänglich umgibt. Es ist weiterhin vorgesehen, dass das hülsenförmige Grundelement den als Feststoffisolator ausgebildeten Isolationsabschnitt bildet, wobei das Stromwandlermodul eine der Anzahl der ringförmigen Stromwandlereinheiten entsprechende Zahl von Modulsegmenten mit (a) je einem Leitungsstück zur Bildung eines jeweiligen Teilstücks des Strompfades, (b) je einem das entsprechende Leitungssegment umfänglich umgebenden Isolatorsegment zur Bildung des Feststoffisolators und (c) je einer das Isolatorsegment umfänglich umgebenden ringförmigen Stromwandlereinheit aufweist, wobei das Stromwandlermodul mehrere entlang einer Achse in Serie angeordnete Modulsegmente aufweist. Mit anderen Worten ergibt sich ein Feststoffisolator-ummanteltes Leitungsstück, das auf Breite der jeweiligen Stromwandlereinheit segmentiert ist, wobei das jeweilige Teilstück des Feststoffisolators, also das jeweilige Isolatorsegment, die jeweilige Stromwandlereinheit (auch CT-Kern genannt) trägt. Auf diese Weise ergibt sich eine Möglichkeit zur modularen, flexiblen und anforderungsorientierten Konfiguration des Stromwandlermoduls.

In Hinblick auf die bekannten Stromwandlermodule mit Rohrkapselung ergeben sich zunächst zwei grundsätzliche Unterschiede: (a) die Kapselung/Isolation erfolgt per Feststoffisolator und (b) das Stromwandlermodul weist selbst ein Leitungsstück zur Bildung des in seinem Einbauabschnitt verlaufenden Strompfad-Abschnitts auf.

Unter diesen Randbedingungen kann nun das Stromwandlermodul aus einer mehr oder weniger großen Zahl einzelner Segmente aufgebaut sein. Es handelt sich also um ein segmentiertes feststoffisoliertes Stromwandlermodul. Ein solches segmentiertes feststoffisoliertes Stromwandlermodul kann durch Nutzung des Baukasten-Prinzips mit unterschiedlichen Segmenten sehr flexibel aufgebaut werden.

Es ist vorgesehen, dass das Stromwandlermodul mehrere entlang einer Achse in Serie angeordnete Modulsegmente aufweist. Erst bei mehreren Modulsegmenten kommt die Flexibilität richtig zum Tragen.

Dabei ist mit Vorteil vorgesehen, dass die Modulsegmente mittels mindestens eines stangenförmigen Halteelements, insbesondere Gewindeankers, gehalten werden, wobei die Modulsegmente auf das stangenförmige Halteelement aufgefädelt oder aufgeschraubt sind.

Bevorzugt ist dabei genau ein zentrales stangenförmiges Halteelement vorgesehen, das durch alle Leitungssegmente hindurch verläuft.

Gemäß einer bevorzugten Ausgestaltung der Erfindung sind die jeweilige ringförmige Stromwandlereinheit auf dem entsprechenden Isolatorsegment verklebt. Diese Art der Befestigung ist einfach realisierbar und hat sich bewährt.

Gemäß einer weiteren bevorzugten Ausgestaltung der Erfindung weist das Stromwandlermodul mindestens ein reines Zwischensegment ohne Stromwandlerfunktion auf, dass ein Leitungssegment zur Bildung eines Teilstücks des Strompfades und ein das Leitungssegment umfänglich umgebendes Isolatorsegment für den Feststoffisolator aufweist. Dieses Zwischenelement ist eine Art Abstandhalter.

Gemäß einer weiteren bevorzugten Ausgestaltung der Erfindung ist das jeweilige Isolatorsegment mit dem entsprechenden Leitungssegment vergossen. Das Isolatormaterial ist dabei bevorzugt ein Harz. Diese Art der Isolation ist einfach realisierbar und hat sich bewährt.

Bei der erfindungsgemäßen Schaltanlage, insbesondere gasisolierte Schaltanlage, die mindestens einen gekapselten Strompfad aufweist, ist vorgesehen, dass diese mindestens ein vorstehend genanntes Stromwandlermodul umfasst. Dieses in der Regel individuell aufgebaute Stromwandlermodul wird dann einfach komplett zwischen zwei weitere Komponenten der Anlage "zwischengeflanscht".

Gemäß einer weiteren bevorzugten Ausgestaltung der erfindungsgemäßen Schaltanlage weist diese eine Mehrzahl von Strompfaden und eine der Anzahl der Strompfade entsprechende Zahl von Stromwandlermodulen auf. Bei den unterschiedlichen Strompfaden handelt es sich in der Regel um unterschiedliche Phasen.

Gemäß einer weiteren bevorzugten Ausgestaltung der erfindungsgemäßen Schaltanlage ist das zumindest eine Stromwandlermodul im inneren eines Gehäuseabschnitts der Schaltanlage angeordnet. Eine solche zusätzliche Kapselung ist isolationstechnisch nicht nötigt, kann aber aus verschiedensten Gründen gewünscht sein.

Im Folgenden werden Ausführungsbeispiele der Erfindung schematisch in Zeichnungen gezeigt und nachfolgend näher beschrieben. Dabei zeigen:
- Fig. 1: ein geschnittenes Stromwandlermodul gemäß einer ersten bevorzugten Ausführungsform der Erfindung in einer Seitenansicht und
- Fig. 2: einen Teil einer Schaltanlage mit Stromwandlermodulen gemäß einer weiteren bevorzugten Ausführungsform der Erfindung in einer Schnittdarstellung.

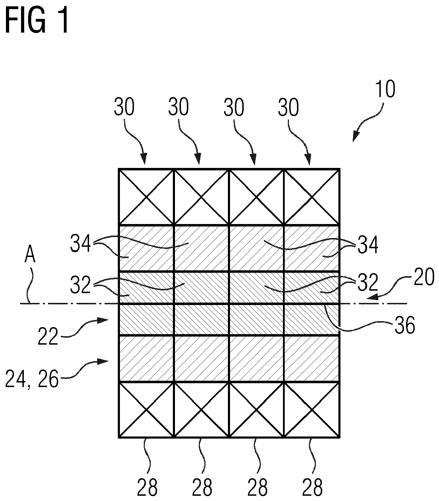

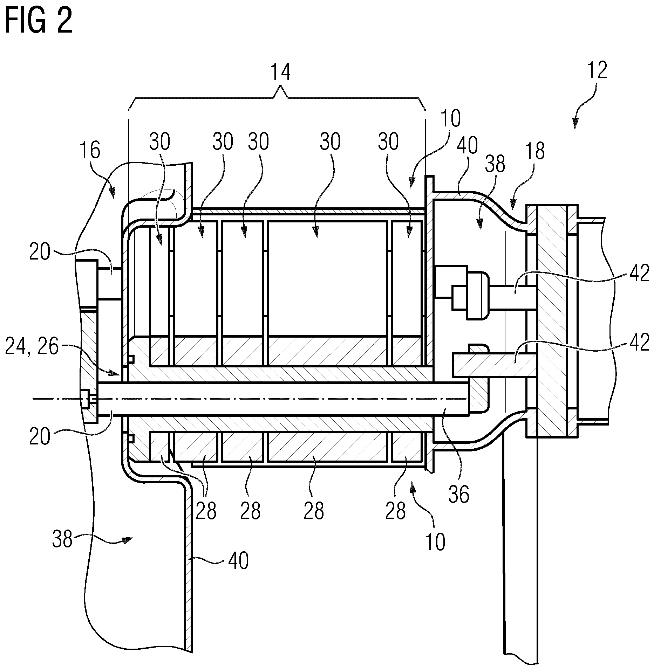

Die Fig. 1 zeigt ein Stromwandlermodul 10 zum Einbau in eine (in Fig. 2 ansatzweise gezeigte) Schaltanlage 12, genauer gesagt eine gasisolierte Schaltanlage. Wie später in Fig. 2 erkennbar, wird ein derartiges Stromwandlermodul 10 beispielsweise in einem Zwischenraum 14 zwischen zwei Gehäuseabschnitte 16, 18 einer Kapselungsgehäuseanordnung der Schaltanlage verbaut und überbrückt einen entsprechenden Strompfad 20 der Schaltanlage 12. Zu diesem Zweck weist das Stromwandlermodul 10 ein Leitungsstück 22 auf, welches entlang einer Achse A verläuft und umfänglich von einem Feststoffisolator 24 umgeben ist, der den Strompfad 20 bzw. das Leitungsstück 22 nach außen elektrisch isoliert. Dieser Feststoffisolator 24 bildet ein hülsenförmiges Grundelement 26, auf dem hier im gezeigten Beispiel mehrere ringförmige Stromwandlereinheiten 28 des Stromwandlermoduls 10 angeordnet sind und das hülsenförmige Grundelement 26 dabei umfänglich umgeben.

Das Stromwandlermodul 10 weist eine der Anzahl der ringförmigen Stromwandlereinheiten 28 entsprechende Zahl von Modulsegmenten 30 mit (i) je einem Leitungssegment 32 zur Bildung eines jeweiligen Teilstücks des Leitungsstücks 22 bzw. des Strompfades 20, (ii) je einem das entsprechende Leitungssegment 32 umfänglich umgebenden Isolatorsegment 34 zur Bildung eines Teilstücks des Feststoffisolators 24 und (iii) je einer das Isolatorsegment 34 umfänglich umgebenden ringförmige Stromwandlereinheit 28 (auch Ringkern genannt) auf.

Das Stromwandlermodul 10 ist also ein segmentiertes Stromwandlermodul 10, das aus einer Mehrzahl von Modulsegmenten 30 aufgebaut ist. Es ergibt sich mit anderen Worten ein von einem Feststoffisolator ummanteltes Leitungsstück 22 das auf Breite der jeweiligen Stromwandlereinheit 28 segmentiert ist, wobei das jeweilige Teilstück des Feststoffisolators 24, also das jeweilige Isolatorsegment 34, die jeweilige Stromwandlereinheit 28 (auch CT-Kern genannt) trägt. Auf diese Weise ergibt sich eine Möglichkeit zur modularen, flexiblen und anforderungsorientierten Konfiguration des Stromwandlermoduls 10.

Die Fig. 2 zeigt einen Teil der bereits erwähnten Schaltanlage 12 mit Stromwandlermodulen 10 in einer Schnittdarstellung. Die hier gezeigte Schaltanlage 12 ist beispielsweise eine gasisolierte Schaltanlage, bei der in dem gezeigten Teil der Schaltanlage 12 drei (unterschiedlichen Phasen entsprechende) Strompfade 20 vorgesehen sind. Da es sich um eine Schnittdarstellung durch die Anlage 12 handelt, sind jedoch nur zwei der drei Strompfade 20 und auch nur zwei der drei Stromwandlermodulen 10 sichtbar, von denen eines vollständig und das andere geschnitten dargestellt ist. Die Stromwandlermodule 10 sind hier im Beispiel der Fig. 2 in einem Zwischenraum 14 zwischen zwei Gehäuseabschnitten 16, 18 einer Kapselungsgehäuseanordnung der Schaltanlage 12 verbaut und überbrücken die entsprechenden Strompfade 20 der Schaltanlage 12 von dem einen in den anderen Abschnitt 16, 18.

In jedem Abschnitt 16, 18 des Kapselungsgehäuses der Schaltanlage 12 ergibt sich ein separater Gasraum 38, durch den die gekapselten Strompfade 20 verlaufen. Bei der hier (teilweise) gezeigten Schaltanlage 12 gehören diese Abschnitte 16, 18 zu einem Leistungsschalter und einem entsprechenden Abgangskreuzbaustein. Der Gehäuseteil des Leistungsschalters ist ein Schaltergehäuse, der Gehäuseteil des Abgangskreuzbausteins ist ein Aufteilungsgehäuse. Vom jeweiligen Abschnitt 16, 18 des Kapselungsgehäuses ist je ein Teil der Wandung 40 in Fig. 2 erkennbar, der den jeweiligen Gasraum 38 umgibt. Im jeweiligen Gasraum 38 befinden sich weitere Leitungsstücke 42 für die Strompfade 20, die hier im jeweiligen Gasraum 38 gekapselt geführt sind.

Es ergibt sich das folgende Vorgehen beim Aufbau der Stromwandlermodule 10: Die feststoffisolierten Leitungssegmente 32, 34, also die jeweiligen Leitungssegment-Isolatorsegment-Verbunde 32, 34, werden mit den zugehörigen Stromwandlereinheiten 28 (Kernen) verbunden (z.B. durch Verklebung). Es ergeben sich einphasen Modulsegmente 30.

Die einphasen Modulsegmente 30 werden in der vom Kunden benötigten Dimensionierung und Reihenfolge mittels zentral angeordneter Gewindestange 36 (bzw. direkt miteinander verschraubt) zu einem einphasen Stromwandlermodul 10 zusammengespannt. Das kombinierte einphasen Stromwandlermodul 10 wird anschließend zwischen Leistungsschalter und Abgangskreuzbaustein zu einem drei-Phasen Stromwandler montiert.

Entscheidender Vorteil: bei Änderungswünschen durch den Kunden (z.B. andere Kernkombination oder veränderte Kernübersetzung) muss nicht wie bisher das gesamte Stromwandlermodul 10 neu angefertigt werden, sondern nur einzelne Modulsegmente 30 ausgetauscht oder die Reihenfolge der Modulsegmente 30 verändert werden.

Im Folgenden soll noch einmal ein Überblick über die Vorteile gegeben werden:
1. Das Stromwandlermodul 10 liegt nicht im (Isolier-)Gasraum 38.
2. Die Feststoffisolation 24 am Stromwandlermodul 10 hat Doppelfunktion - sie isoliert die Hochspannung und trägt zugleich die Stromwandlereinheiten 28.
3. Die Reihenfolge der Stromwandlereinheiten 28 (Kerne) kann auch nach Fertigstellung des Stromwandlermoduls 10 noch einmal beliebig verändert werden.
4. Einzelne Stromwandlereinheiten 28 (Kerne) können bei Bedarf ausgetauscht werden, ohne gleich das gesamte Stromwandlermodul 10 verschrotten zu müssen.
6. das beschriebene Stromwandlermodul 10 ist einfach längenvariabel.
7. Beim Stromwandlermodul 10 entfällt das Druckgehäuse und die Sekundärdurchführungen.
8. Das Stromwandlermodul 10 bekommt eine sehr große Flexibilität in seiner Anwendung.
9. Bei Verwendung von alternativen Gasen wird die Baugröße des Stromwandlermoduls 10 verringert, denn die Feststoffisolation bedingt kleinere dielektrische Abstände als z.B. bei reiner Luft (Clean Air).
10. Die Bauform der Stromwandlereinheiten 10 (Kerne) kann höher gestaltet werden. Dadurch sind kürzere Wandlermodule 10 bzw. idealere Kernformen realisierbar.
11. Das feststoffisolierte Stromwandlermodul 10 ist in Summe etwas leichter als die bisherige SF6-isolierte Variante.

## Patentansprüche

1. Stromwandlermodul (10) für eine Schaltanlage (12), insbesondere gasisolierte Schaltanlage (12), welche einen gekapselten Strompfad (20) aufweist, mit
- einem hülsenförmigen Grundelement (26) zur Bildung zumindest eines Isolationsabschnitts zur Isolierung des Strompfades (20) nach außen und
- mindestens einer ringförmigen Stromwandlereinheit (28), die auf dem hülsenförmigen Grundelement (12) angeordnet ist und das hülsenförmige Grundelement (12) dabei umfänglich umgibt,
wobei
das hülsenförmige Grundelement (26) einen Feststoffisolator (24) des Isolationsabschnitts bildet, wobei das Stromwandlermodul (10) eine der Anzahl der ringförmigen Stromwandlereinheiten (28) entsprechende Zahl von Modulsegmenten (30) mit
- je einem Leitungssegment (32) zur Bildung eines jeweiligen Teilstücks des Strompfades (20),
- je einem das entsprechende Leitungssegment (32) umfänglich umgebenden Isolatorsegment (34) zur Bildung des Feststoffisolators (24) und
- je einer das Isolatorsegment (34) für den Feststoffisolator (24) umfänglich umgebenden ringförmigen Stromwandlereinheit (28)
aufweist, **dadurch gekennzeichnet, dass**
das Stromwandlermodul (10) mehrere entlang einer Achse (A) in Serie angeordnete Modulsegmente (30) aufweist.

2. Stromwandlermodul nach Anspruch 1,
**dadurch gekennzeichnet, dass**
die Modulsegmente (30) mittels mindestens eines stangenförmigen Halteelements (36), insbesondere Gewindeankers, gehalten werden, wobei die Modulsegmente (30) auf das stangenförmige Halteelement (36) aufgefädelt oder aufgeschraubt sind.

3. Stromwandlermodul nach Anspruch 2,
**dadurch gekennzeichnet, dass**
genau ein zentrales stangenförmiges Halteelement (36) vorgesehen ist, das durch alle Leitungssegmente (32) hindurch verläuft.

4. Stromwandlermodul nach einem der Ansprüche 1 bis 3, **dadurch gekennzeichnet, dass**
die jeweilige ringförmige Stromwandlereinheit (28) auf dem entsprechenden Isolatorsegment (34) verklebt sind.

5. Stromwandlermodul nach einem der Ansprüche 1 bis 4, **gekennzeichnet durch**
mindestens ein reines Zwischensegment ohne Stromwandlerfunktion, das ein Leitungssegment (32) zur Bildung eines Teilstücks des Strompfades (20) und ein das Leitungssegment (32) umfänglich umgebendes Isolatorsegment (34) für den Feststoffisolator (24) aufweist.

6. Stromwandlermodul nach einem der Ansprüche 1 bis 5, **dadurch gekennzeichnet, dass**
das jeweilige Isolatorsegment (34) mit dem entsprechenden Leitungssegment (32) vergossen ist.

7. Schaltanlage, insbesondere gasisolierte Schaltanlage, die mindestens einen gekapselten Strompfad (10) aufweist, **gekennzeichnet durch**
zumindest ein Stromwandlermodul (10) nach einem der Ansprüche 1 bis 6.

8. Schaltanlage nach Anspruch 7,
**gekennzeichnet durch**
eine Mehrzahl von Strompfaden (20) und eine der Anzahl der Strompfade (20) entsprechende Zahl von Stromwandlermodulen (10) .

9. Schaltanlage nach Anspruch 7 oder 8,
**dadurch gekennzeichnet, dass**
das zumindest eine Stromwandlermodul (10) im inneren eines Gehäuseabschnitts (16, 18) der Schaltanlage (12) angeordnet ist.

## Claims

1. Current transformer module (10) for switchgear (12), in particular gas-insulated switchgear (12), which has an encapsulated current path (20), comprising
- a sleeve-shaped base element (26) for forming at least one insulation portion for insulating the current path (20) to the outside, and
- at least one annular current transformer unit (28) that is arranged on the sleeve-shaped base element (12) and circumferentially surrounds the sleeve-shaped base element (12), wherein
the sleeve-shaped base element (26) forms a solid insulator (24) of the insulation portion, wherein the current transformer module (10) has a number of module segments (30) corresponding to the number of annular current transformer units (28), each comprising
- a line segment (32) for forming a respective section of the current path (20),
- an insulator segment (34), which circumferentially surrounds the corresponding line segment (32), for forming the solid insulator (24), and
- an annular current transformer unit (28), which circumferentially surrounds the insulator segment (34) for the solid insulator (24),
**characterized in that**
the current transformer module (10) has multiple module segments (30) arranged in series along an axis (A).

2. Current transformer module according to Claim 1, **characterized in that**
the module segments (30) are held by means of at least one rod-shaped holding element (36), in particular threaded anchor, wherein the module segments (30) are threaded or screwed onto the rod-shaped holding element (36).

3. Current transformer module according to Claim 2, **characterized in that**
precisely one central rod-shaped holding element (36) that runs through all of the line segments (32) is provided.

4. Current transformer module according to one of Claims 1 to 3,
**characterized in that**
the respective annular current transformer units (28) are adhesively bonded to the corresponding insulator segment (34).

5. Current transformer module according to one of Claims 1 to 4,
**characterized by**
at least one pure intermediate segment without a current transformer function, which has a line segment (32) for forming a section of the current path (20) and an insulator segment (34), which circumferentially surrounds the line segment (32), for the solid insulator (24).

6. Current transformer module according to one of Claims 1 to 5,
**characterized in that**
the respective insulator segment (34) is cast with the corresponding line segment (32).

7. Switchgear, in particular gas-insulated switchgear, which has at least one encapsulated current path (10), **characterized by**
at least one current transformer module (10) according to one of Claims 1 to 6.

8. Switchgear according to Claim 7,
**characterized by**
a plurality of current paths (20) and a number of current transformer modules (10) corresponding to the number of current paths (20).

9. Switchgear according to Claim 7 or 8,
**characterized in that**
the at least one current transformer module (10) is arranged in the interior of a housing portion (16, 18) of the switchgear (12) .

## Revendications

1. Module (10) de transformateur de courant d'une installation (12) de distribution, en particulier d'une installation (12) de distribution à isolation par du gaz, qui a un chemin (20) de courant blindé, comprenant
- un élément (26) de base en forme de manchon pour la formation d'au moins une partie d'isolement pour l'isolement du chemin (20) de courant vers l'extérieur, et
- au moins une unité (28) annulaire de transformateur de courant, qui est disposée sur l'élément (12) de base en forme de manchon et qui entoure ainsi sur tout le tour l'élément (12) de base en forme de manchon,
dans lequel
l'élément (26) de base en forme de manchon forme un isolateur (24) solide de la partie d'isolement, dans lequel le module (10) de transformateur de courant a, correspondant au nombre des unités (28) annulaires de transformateur de courant, un nombre de segments (30) de module comprenant
- chacun un segment (32) de ligne pour la formation d'un tronçon respectif du chemin (20) de courant,
- chacun un segment (34) d'isolateur entourant sur tout le tour le segment (32) de ligne correspondant pour la formation de l'isolateur (24) solide et
- chacun une unité (28) annulaire de transformateur de courant, entourant sur tout le tour le segment (34) d'isolateur pour l'isolateur (24) de matière solide,
**caractérisé en ce que**
le module (10) de transformateur de courant a plusieurs segments (30) de module montés en série le long d'un axe (A).

2. Module de transformateur de courant suivant la revendication 1,
**caractérisé en ce que**
les segments (30) de module sont maintenus au moyen d'au moins un élément (36) de maintien en forme de tige, en particulier d'une tige d'ancrage filetée, dans lequel les segments (30) de module sont enfilés ou vissés sur l'élément (36) de maintien en forme de tige.

3. Module de transformateur de courant suivant la revendication 2,
**caractérisé en ce qu'**
il est prévu exactement un élément (36) de maintien central en forme de tige, qui traverse tous les segments (32) de ligne.

4. Module de transformateur de courant suivant l'une des revendications 1 à 3,
**caractérisé en ce que**
les unités (28) annulaires respectives de transformateur de courant sont collées sur le segment (34) d'isolateur correspondant.

5. Module de transformateur de courant suivant l'une des revendications 1 à 4,
**caractérisé par**
au moins un segment intermédiaire simple sans fonction de transformateur de courant, qui a un segment (32) de ligne pour la formation d'un tronçon du chemin (20) de courant et un segment (34) d'isolateur entourant sur tout le tour le segment (32) de ligne pour l'isolateur (24) de matière solide.

6. Module de transformateur de courant suivant l'une des revendications 1 à 5,
**caractérisé en ce que**
le segment (34) respectif d'isolateur est coulé avec le segment (32) de ligne correspondant.

7. Installation de distribution, en particulier installation de distribution à isolation par du gaz, qui a au moins un chemin (10) de courant blindé,
**caractérisée par**
au moins un module (10) de transformateur de courant suivant l'une des revendications 1 à 6.

8. Installation de distribution suivant la revendication 7, **caractérisée par**
une pluralité de chemins (20) de courant et un nombre, correspondant au nombre des chemins (20) de courant, de modules (10) de transformateur de courant.

9. Installation de distribution suivant la revendication 7 ou 8,
**caractérisée en ce que**
le au moins un module (10) de transformateur de courant est disposé à l'intérieur d'une partie (16, 18) de boîtier de l'installation (12) de distribution.
